# EUROPEAN PATENT APPLICATION

(11) **EP 1 591 314 A1**
(43) Date of publication of application: **02.11.2005**
(21) Application number: 04010065.3
(22) Date of filing: 28.04.2004
(51) Int. Cl.: B60Q 1/26, B60R 1/12, B60Q 1/34

(54) **Pattern-display signal device for vehicle**

(71) Applicant: Weng, Jen-Hsi, Ping Je City, Taoyuan Hsien (TW)
(72) Inventor: Weng, Jen-Hsi, Ping Je City, Taoyuan Hsien (TW)
(74) Representative: Casalonga, Axel

(57) **Abstract**

A pattern-display signal device (20) installed in a motor vehicle for synchronous operation with one directional light is disclosed to include a flat base (21) having a receiving space (212) provided with a reflector (22), a light transmitting substrate (23) pressed on the reflector in the base, LEDs (241) mounted in the base (21) and aimed at one side of the substrate (23) for synchronous operation with the directional light, a pattern film (26) having a design therein and bonded to the substrate (23), a lens (30) covered on the pattern film, a first adhesive (25) adhering the lens to the base, and a second adhesive adhering the lens to the motor vehicle.

## Description

### BACKGROUND OF THE INVENTION

### a. Field of the invention:

The present invention relates to a signal device and more particularly, to a pattern-display signal device to be installed in a motor vehicle and electrically connected with one directional light of the motor vehicle to a control circuit for synchronous operation with the directional light.

### b. Description of the Related Art:

A motor vehicle has directional lights for directional indication before turning. However, the directional signal of the directional light of a running motor vehicle may be not visible to the driver of another motor vehicle running near one lateral side, and a crushing accident may occur upon turning of the motor vehicle.

Taiwan Patent Publication No. 564828 discloses a vehicle rearview mirror, which comprises a casing 11, a mounting member 12 extended from one side of the casing 11, and a light source 13 installed in the mounting member and electrically connected with one directional light to a control circuit. FIGS. 2A and 2B show another a vehicle rearview mirror according to Taiwan Patent Publication No. 465497. According to this design, the rearview mirror comprises a casing 11, a light source 14 mounted inside the casing 11, and a lens 15 covered on the casing 11 in front of the light source 14. The lens 15 is marked with a light-tight directional sign 151.

According to the aforesaid two prior art designs, the rearview mirrors are specifically designed. A car owner who wishes to install a rearview mirror of one of the aforesaid two prior art designs, the original rearview mirror of the car must be taken away. Therefore, the installation cost of the prior art design is high. Further, the directional sign in the lens of the rearview mirror is not changeable, i.e., the user cannot change the pattern of the direction sign as desired.

### SUMMARY OF THE INVENTION

The present invention has been accomplished under the circumstances in view. It is one object of the present invention to provide a pattern-display signal device, which is design for use in a motor vehicle to work synchronously with one directional light. It is another object of the present invention to provide a pattern-display signal device, which provides a light-emitting panel to intermittently project the image of a design on a lens, giving a warning signal. It is still another object of the present invention to provide a pattern-display signal device, which is practical for use in any of a variety of motor vehicles without interfering with the functioning of the motor vehicle.

To achieve these and other objects of the present invention, the pattern-display signal device is installed in a motor vehicle and electrically connected with one directional light of the motor vehicle to a control circuit for synchronous operation with the directional light, comprising a flat base, the base comprising a peripheral flange and a receiving space surrounded by the peripheral flange; a reflector mounted in a bottom side of the receiving space of the base; a substrate pressed on the reflector inside the receiving space of the base, the substrate admitting light; a light source mounted in the receiving space of the base at one side of the substrate, the light source comprising a circuit board electrically connected with the directional light to the control circuit, and a plurality of light emitting diodes installed in the circuit board and aimed at one lateral side of the substrate; a pattern film bonded to the substrate, the pattern film having a design therein; and an adhesive sheet member fastened to the base and covered on the light source and the pattern film and adhered to the rear windshield of the motor vehicle, the adhesive sheet member having an opening corresponding to the design of the pattern film.

### BRIEF DESCRIPTION OF THE DRAWINGS

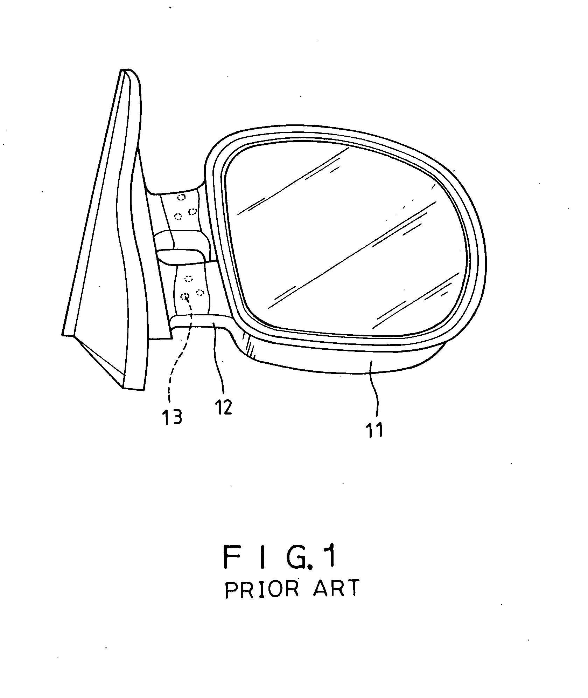

FIG. 1 is a perspective view of a conventional vehicle rearview mirror.

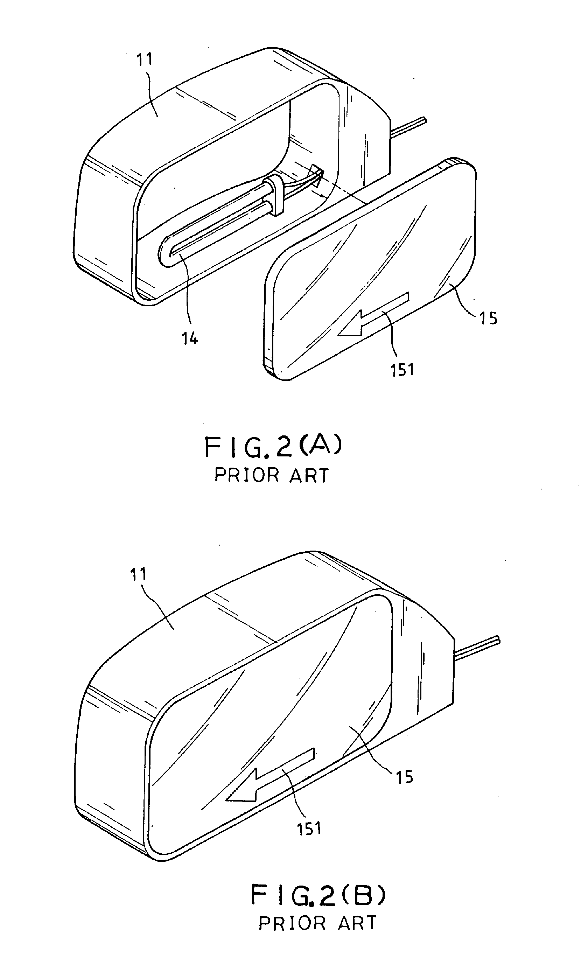

FIG. 2A is an exploded view of another structure of conventional vehicle rearview mirror.
FIG. 2B is an elevational assembly view of the conventional vehicle rearview mirror shown in FIG. 2A.
FIG. 3 is an exploded view of a pattern-display signal device according to the present invention.
FIG. 4 is another exploded view of the pattern-display signal device according to the present invention.
FIG. 5 is a perspective assembly view of the pattern-display signal device according to the present invention.
FIG. 6 is a schematic front view of the present invention, showing the formation of the light-emitting panel.
FIG. 7 is similar to FIG. 6 but showing the design of the pattern film in presence.
FIG. 8 shows an installation example of the present invention in a vehicle rearview mirror.
FIG. 9 is an assembly view of FIG. 8.
FIG. 10 is a sectional view of the assembly shown in FIG. 9.
FIG. 11 is a front view of the assembly shown in FIG. 9, showing an off status of the light source and the image of a car coming from behind seen in the lens of the rearview mirror.
FIG. 12 is another front view of the assembly shown in FIG. 9, showing an on status of the light source and the design of the pattern film projected onto the lens of the rearview mirror.
FIG. 13 illustrates various installation example of the present invention in a car.
FIG. 14 is a schematic drawing showing a use of the present invention in a car.

### DETAILED DESCRIPTION OF THE ILLUSTRATIVE EMBODIMENTS

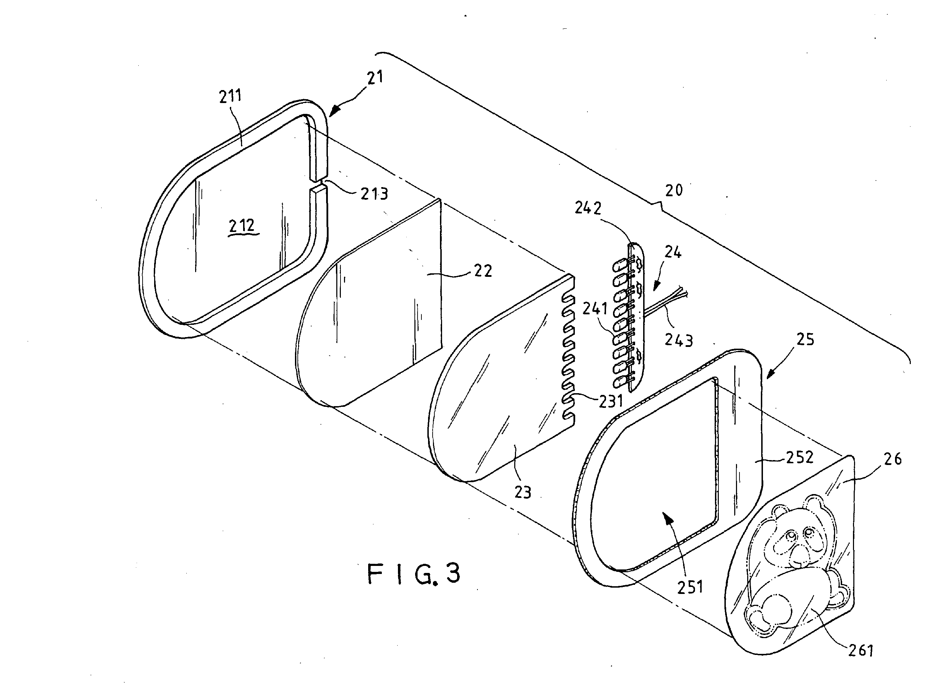

Referring to FIG. 3, a pattern-display signal device 20 is shown comprising a base 21, a reflector 22, a substrate 23, a light source 24, a mounting device 25, and a pattern film 26.

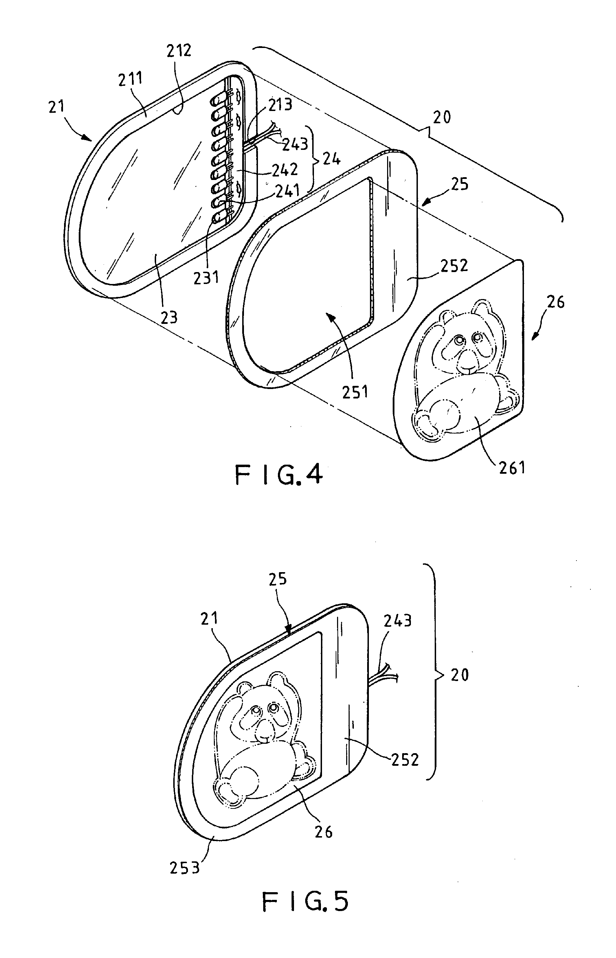

Referring to FIGS. 4 and 5 and FIG. 3 again, the base 21 is a sheet member having a peripheral flange 211, a peripheral notch 213 in the peripheral flange 211, and a receiving space 212 surrounded by the peripheral flange 211. The reflector 22 is a light tight sheet member fitted into the receiving space 212 in the base 21 and adapted to reflect light. The reflector 22 can be formed of a color sheet of paper or plastic material. The color of the reflector 22 is determined subject to the color of the light source 24. Alternatively, a colored reflecting paint can be used and directly covered on the bottom wall of the receiving space 212, forming the reflector 22.

The substrate 23 is made of acrylics or any suitable material that admits light. The substrate 23 is pressed on the reflector 22 within the receiving space 212 in the base 21, having a plurality of peripheral notches 231 at one lateral side. The light source 24 is mounted in the receiving space 212 in the base 21 at one side of the substrate 23, comprising a circuit board 241, a plurality of LEDs (light emitting diodes) 241 installed in the circuit board 241 and respectively engaged into the peripheral notches 231 of the substrate 23, and electric wire 243 extended from the circuit board 241 out of the base 21 through the peripheral notch 213 and electrically connected to the directional light control circuit of the motor vehicle in which the pattern-display signal device 20 is installed. Therefore, the LEDs 241 can be synchronously turned on/off with the corresponding directional light of the motor vehicle.

The pattern film 26 is thin film bonded to the surface of the substrate 23, having a design 261 in it. The design 261 can be a pattern, sign, mark, figure, etc. Alternatively, the pattern film 26 can be a slide (transparent picture) detachably mounted in the base 21 and closely attached to the surface of the substrate 23, or a printing directly printed on the surface of the substrate 23.

The mounting device 25 is a double-sided adhesive sheet member having a body 252 adhered to the peripheral frame 211 of the base 21 to hold down the substrate 23 and the light source 24 in the base 21, and an opening 251 in the body 252 corresponding to the design 261 of the pattern film 26. Before installation, the outer stripping paper 253 of the double-sided adhesive sheet member (the mounting device) 25 is remained in place.

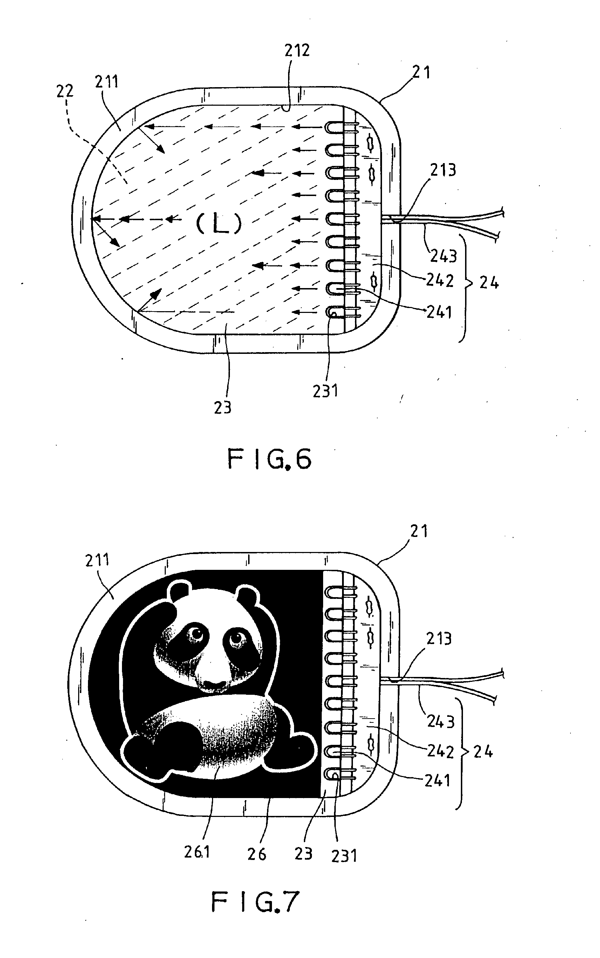

Referring to FIG. 6, when the LEDs 241 are turned on with the respective directional light of the motor vehicle, light rays from the LEDs 241 are projected onto the substrate 23 and then refracted by the substrate 23 and reflected by the reflector 22, thereby forming a light emitting panel L. Light from the light emitting panel L is projected onto the pattern film 26, showing the design 261 (see FIG. 7).

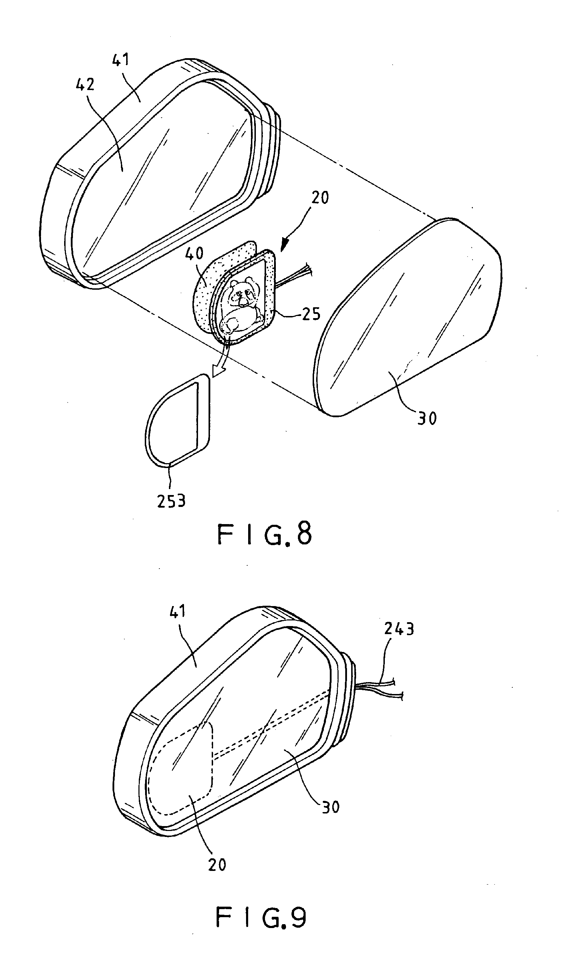

FIGS. 8~11 show an installation example of the present invention. The outer stripping paper 253 is removed from the double-sided adhesive sheet member (the mounting device) 25, and then the double-sided adhesive sheet member (the mounting device) 25 is adhered to the back surface of the lens 30 of a rearview mirror 41, and then a double-sided adhesive tape 40 is used to adhere the back side of the pattern-display signal device 20 to the reflector 42 of the rearview mirror 41. After installation, the electric wire 243 is connected to the directional light control circuit of the motor vehicle.

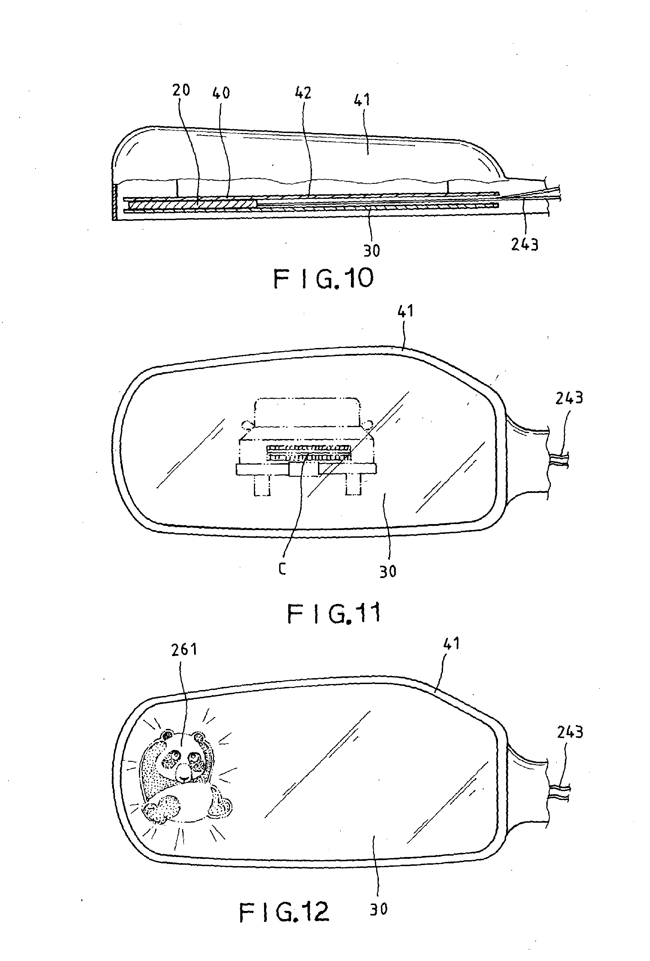

Referring to FIGS. 10 and 11 again, the pattern-display signal device 20 is adhered to the to the reflector 42 of the rearview mirror 41 by means of a double-sided adhesive tape 40 without affecting normal functioning of the rearview mirror 41. When adjusting the angular position of the rearview mirror 41, the pattern-display signal device 20 is moved with the rearview mirror 41. Further, the rearview mirror 41 provides a space between the lens 30 and the reflector 42 for accommodating the electric wire 243. When the directional light is off, the image of the car C coming from the rear side is seen in the lens 30. The lens 30 has the back surface coated with a thin layer of chrome such that the lens 30 works as a reflective mirror when the light source 24 is off.

Referring to FIG. 12, when the light source 24 is on, light from the aforesaid light-emitting panel L passes through the pattern film 26 and the lens30, thereby projecting the image of the design 261 onto the lens 30. The image of the design 261 is intermittently shown on the lens 30 during flashing of the respective directional light of the motor vehicle.

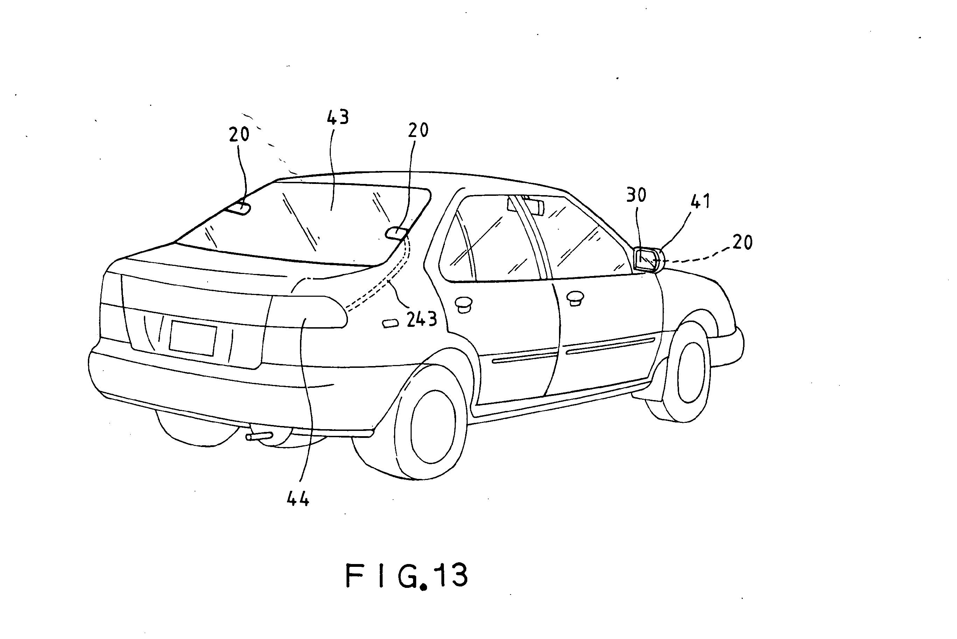

Referring to FIG. 13, the pattern-display signal device 20 can be adhered to the back side of the lens 30 of one rearview mirror 41. The pattern-display signal device 20 can also be adhered to the inner surface of the rear windshield 43 with the electric wire 243 electrically connected with the respective directional light 44 to the control circuit of the car.

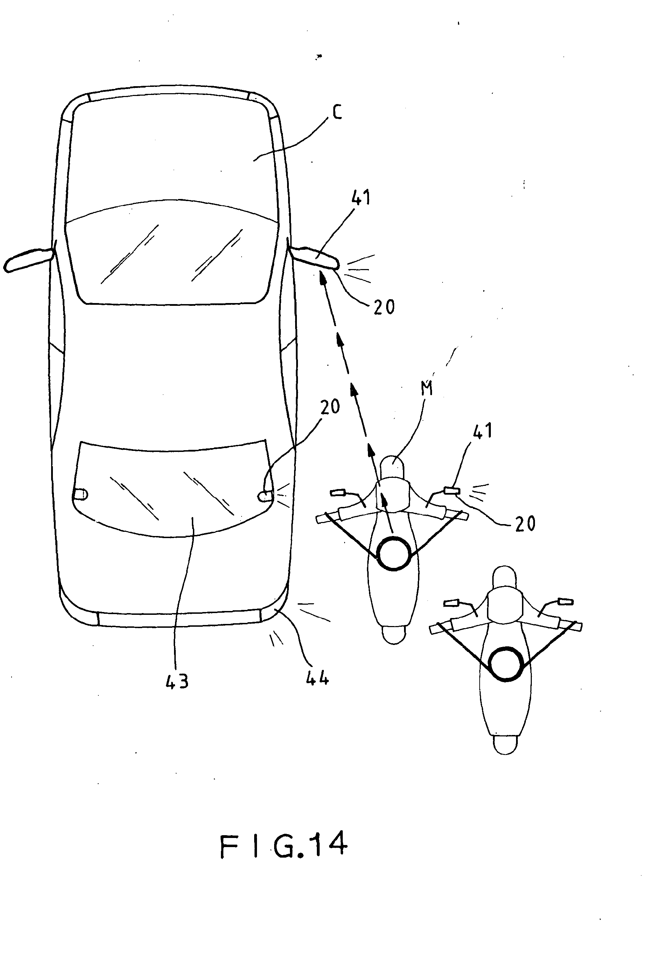

Referring to FIG. 14, during moving of the car, the motorcyclist of the motorcycle M running near one lateral side cannot see the directional light 44, however the flashing of the image of the design 261 on the lens 30 gives an equivalent directional signal to the motorcyclist of the motorcycle M. Further, the pattern-display signal device 20 can also be installed in the rearview mirror 41 of a motorcycle M and electrically connected with the respective directional light to the control circuit of the motorcycle M.

A prototype of pattern-display signal device has been constructed with the features of FIGS. 3~14. The pattern-display signal device functions smoothly to provide all of the features discussed earlier.

Although particular embodiments of the present invention have been shown and described, it will be understood that various modifications and changes could be made thereunto without departing from the spirit and scope of the invention disclosed.

## Claims

1. A pattern-display signal device installed in a motor vehicle and electrically connected with one directional light of the motor vehicle to a control circuit for synchronous operation with said directional light, the pattern-display signal device comprising:
a flat base, said base comprising a peripheral flange and a receiving space surrounded by said peripheral flange;
a reflector mounted in a bottom side of said receiving space of said base;
a substrate pressed on said reflector inside said receiving space of said base, said substrate admitting light;
a light source mounted in said receiving space of said base at one side of said substrate, said light source comprising a circuit board electrically connected with said directional light to said control circuit, and a plurality of light emitting diodes installed in said circuit board and aimed at one lateral side of said substrate;
a pattern film bonded to said substrate, said pattern film having a design therein;
a lens covered on said pattern film;
first adhesive means adhering said lens to the peripheral flange of said base; and
second adhesive means adhering said lens to said motor vehicle.

2. The pattern-display signal device as claimed in claim 1, wherein said base has a peripheral notch in said peripheral flange; said circuit board of said light source comprises an electric wire extended out of said peripheral notch of said base for connection to said control circuit.

3. The pattern-display signal device as claimed in claim 1, wherein said substrate has a plurality of notches in one lateral side thereof adapted to accommodate said light emitting diodes.

4. The pattern-display signal device as claimed in claim 1, wherein said first adhesive means and said second adhesive means are double-sided adhesive tapes.

5. A pattern-display signal device installed in a motor vehicle and electrically connected with one directional light of the motor vehicle to a control circuit for synchronous operation with said directional light, the pattern-display signal device comprising:
a flat base, said base comprising a peripheral flange and a receiving space surrounded by said peripheral flange;
a reflector mounted in a bottom side of said receiving space of said base;
a substrate pressed on said reflector inside said receiving space of said base, said substrate admitting light;
a light source mounted in said receiving space of said base at one side of said substrate, said light source comprising a circuit board electrically connected with said directional light to said control circuit, and a plurality of light emitting diodes installed in said circuit board and aimed at one lateral side of said substrate;
a pattern film bonded to said substrate, said pattern film having a design therein; and
an adhesive sheet member fastened to said base and covered on said light source and said pattern film and adhered to the rear windshield of said motor vehicle, said adhesive sheet member having an opening corresponding to the design of said pattern film.
